# NEUE EUROPÄISCHE PATENTSCHRIFT

(11) **EP 1 124 150 B2**
(45) Veröffentlichungstag und Bekanntmachung des Hinweises auf die Entscheidung über den Einspruch: **18.02.2015**
(45) Hinweis auf die Patenterteilung: 28.03.2007
(21) Anmeldenummer: 00102901.6
(22) Anmeldetag: 12.02.2000
(51) Int. Cl.: G02B 21/00

(54) **Operationsmikroskop**
Surgical microscope
Microscope chirurgical

(43) Veröffentlichungstag der Anmeldung: 16.08.2001
(73) Patentinhaber: Leica Microsystems (Schweiz) AG, 9435 Heerbrugg (CH)
(72) Erfinder: Pensel, Jürgen, Dr., 9450 Altstätten (CH)
(74) Vertreter: Patentbüro Paul Rosenich AG

(56) Entgegenhaltungen:
- DE-A- 3 811 791
- DE-U- 9 405 820
- GB-A- 2 302 184
- US-A- 5 048 941
- US-A- 5 834 698
- Firmensprospekt STN (9/98)
- Kommissionierbeleg (22.3.1999)
- Installationsreport (16.4.1999)
- Computerzeichnung Kabel (23.01.1998)
- Computerzeichnung Statvi NC4-1 (31.7.1997)
- Computerzeichnung Stativ NC4-2 (31.7.1997)
- Computerzeichnung Stativ NC4-3 (31.7.1997)

## Beschreibung

Die Erfindung betrifft ein Operationsmikroskop gemäss dem Oberbegriff des Anspruches 1.
Unter Operationsmikroskop im Sinne der Erfindung ist ein Mikroskop zu verstehen, das in Bezug auf ein Objekt beweglich ist. Und deshalb eine gewisse Flexibilität bei allfälligen Verbindungen mit externen Geräten aufweist. Sehr häufig werden solche Mikroskope bei Operationen eingesetzt. Häufig findet man solche Mikroskope auch bei industriellen oder gewerblichen Anwendungen.

Solche Mikroskope verfügen häufig über eine integrierte Beleuchtung, bei der die Lichtquelle im Mikroskop eingebaut ist. Letztere ist oftmals jedoch auch ausgelagert, um im Bereich des Mikroskopkörpers die Erwärmung, das Gewicht und die Gehäusedimension gering zu halten. Bei solchen Aufbauten wird das Licht über einen Lichtleiter von einer externen Lichtquelle zum Mikroskopkörper und durch diesen durch auf das Operationsfeld gelenkt.

Weiters sind solche Mikroskope und darin eingebaute Videokameras häufig mit fernbedienbaren Verstellmechanismen bzw. Aktuatoren ausgerüstet, die einerseits elektrische Antriebe, andererseits jedoch auch Sensoren o.dgl. umfassen, deren Signale in externen Steuerungen bzw. Schaltungen ausgewertet werden.

Häufig befinden sich solche Mikroskope an den Auslegearmen von Stativen, während die externen Geräte und Steuerungen im Ständerbereich des Stativs untergebracht sind.

Die Verbindung zwischen den externen Geräten mit dem Mikroskopkörper bzw. mit den daran befindlichen Anschlüssen erfolgt über flexible Leitungen wie Lichtleitern, elektrische Kabel, elektronische Datenleitungen etc. Ein solches Mikroskop mit einer Stromversorgung, einem Lichtleitkabel zur Operationsbeleuchtung, und einer elektronischen Datenleitung ist beispielsweise aus der Gebrauchsmusterschrift DE 9 405 820 U bekannt.

In der Regel finden sich eine Vielzahl von solchen Leitungen, die in verschiedenen Anwendungsfällen störend sind.

Sie behindern fallweise die Sicht, weisen ein grosses Gewicht auf, führen zu Verklemmungen und Bewegungseinschränkungen und sehen zu dem unordentlich aus. Ausserdem sind sie störanfällig bzw. können durch Beschädigung Störfälle verursachen. Im Bereich der Operationsmikroskopie führen sie zu vergrösserten Oberflächen, die den Gesamtaufbau somit schmutzanfälliger machen.

Es wurden von der Anmelderin bereits Lösungsansätze gemacht, die den Misstand verringern sollten. Das OH-Stativ der Anmelderin hatte zwischen Stativarmen einen flexiblen Schlauch vorgesehen, durch den alle verschiedenen Kabel gezogen waren. Dieser Schlauch war jedoch relativ voluminös und unflexibel und insofern nicht optimal platznutzend, als er für die Nachrüstung einer unbestimmte Anzahl von Kabeln genügend gross gemacht werden musste, auch wenn nicht alle Kabel eingezogen waren. Ausserdem erhöhte der Schlauch das Gewicht der betroffenen Stativarme um sein Eigengewicht.

Der Erfindung liegt somit die Aufgabe zugrunde, die Verbindung zwischen den externen Geräten und dem Mikroskopkörper möglichst leicht, leicht beweglich und nachrüstbar und mit möglichst wenig Kabeln zu realisieren.

Die Kombination der jew. Merkmale der Ansprüche 1 o.2 löst diese Hauptaufgabe nach einer Baugrössen- u. gleichz. Gewichtsreduktion.

Weiterentwickelte bzw. weiter verbesserte Lösungen mit weitergehender Integration und weitergehenden Vorteilen gegenüber dem Stand der Technik ergeben sich aus den abhängigen Ansprüchen und der Figurenbeschreibung.

Ein bevorzugter Aufbau eines erfindungsgemässen Kabels, dass gegebenenfalls auch unabhängig von der Erfindung eingesetzt werden kann, ist koaxial mehrlagig, wobei einer Der Lagen, vorzugsweise jedoch der Kern des Kabels - als Spiegel- oder Faseroptik oder als Flüssigkeitslichtleiter ausgebildet ist, während wenigstens zwei Lagen als wenigstens zweipoliges Leistungskabel ausgebildet sind.

An den Lichtleiteteil eines solchen Kabel schliessen bevorzugt elektro-optische Wandler für Steuerungs-, Sensorik- und Videosignalübertragung, während an den Leistungsteil die Spannungsversorgung anschliesst.

Weitere Verbesserungen und erfindungsgemässe Details ergeben sich aus der Zeichnung, die ein erfindungsgemässes Ausführungsbeispiel darstellt.

Es zeigen dabei:
- Fig. 1: ein symbolisiertes, komplettes, erfindungsgemässes Operationsmikroskop an einem Stativ mit entsprechenden externen Geräten;
- Fig. 2: ein Detail eines erfindungsgemäss abgewandelten Lichtleiters mit elektrooptischen Datenwandlern und Ein- bzw. Ausspiegelungsvorrichtungen;
- Fig. 3: einen anderen Lichtleiter mit besonderer Armierung;
- Fig. 4: ein Detail der Armierung nach Fig.3;
- Fig. 5: eine Variante zum Lichtleiter nach Fig.3;
- Fig. 6: eine weitere Variante zum Lichtleiter nach Fig.3;
- Fig. 7: ein mehradriges Kabel als Leistungs- und Datenträger; .
- Fig. 8: ein zweipoliges Kabel, das sowohl als Leistungs-, als auch als Datenleitung dient.

Die Figuren werden übergreifend beschrieben. Gleiche Teile tragen gleiche Bezugszeichen; unterschiedliche Teile mit vom Prinzip her gleichen Funktionen tragen gleiche Bezugszeichen mit unterschiedlichen Indizes. Die Figuren schränken die Erfindung nicht ein, sondern sind vielmehr als mögliche Ausführungsbeispiele gedacht.

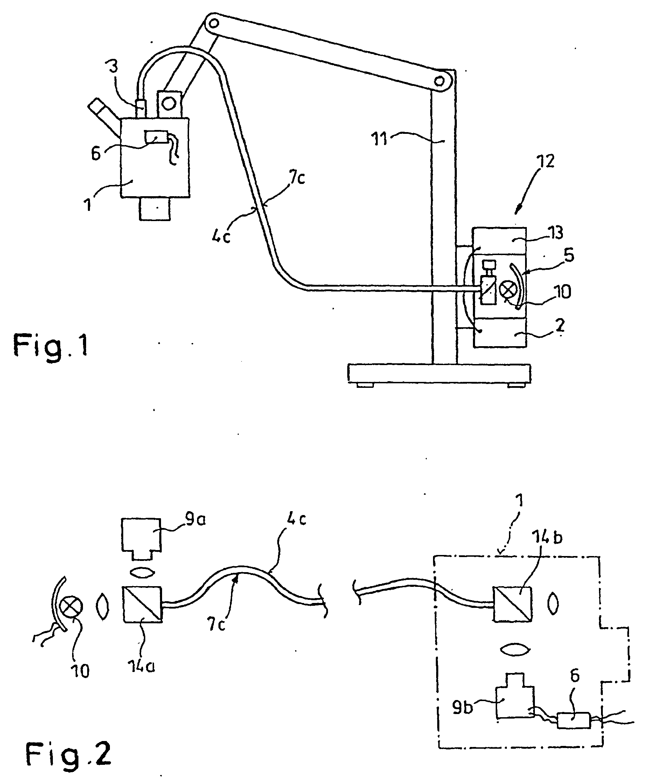

Fig.1 zeigt einen symbolischen Aufbau mit einem Stativ 11, das einen Mikroskopkörper 1 und verschiedene externe Geräte 12 trägt. Diese umfassen z.B. einen Rechner 13 für Steuer- und Messaufgaben; eine Lichtquelle 10, die hier beispielhaft auch als Leistungsversorgungseinheit 5 bezeichnet ist, weil von dort ein Lichtstrom über eine Leistungsverbindung 4c bzw. einen Lichtleiter der Lichtstrom zum Mikroskopkörper 1 bzw. auf ein Operationsfeld gelenkt wird; ein Steuergerät, das z.B. über eine erfindungsgemäss in den Lichtleiter 4c integrierte Datenverbindung 7c mit ferngesteuerten Antrieben im Mikroskop verbunden ist. Das Mikroskop umfasst demnach einen Anschluss 3 für die Leistungsverbindung 4c und einen Anschluss 6 für die Datenverbindung.

Die Datenverbindung ist bei diesem Beispiel realisiert über optoelektronische Wandler 9a und 9b, die elektrische Signale in optische Signale umwandeln bzw. umgekehrt. Diese Signale werden über Strahlenteiler oder Spiegel 14a und 14b in den Lichtleiter 4c ein- bzw. ausgespiegelt, so dass über diesen sowohl der Lichtstrom aus der Lichtquelle, als auch die optischen Signale aus dem Wandler 9a zum Mikroskop gesandt werden, bzw. optische Signale aus dem Wandler 9b in die andere Richtung zum Rechner 13 bzw. zum Steuergerät 2 gesandt werden.

Im Rahmen der Erfindung liegen verschiedenste Kombinationen, so kann die Leistung, die übertragen werden soll, z.B. Licht- und/oder elektrische Leistung sein, während die Daten elektrische und/oder lichtoptische Signale sein können. Wobei dies umfasst, dass elektrische Signale durch Lichtmodulation über den Lichtleiter übertragen werden.

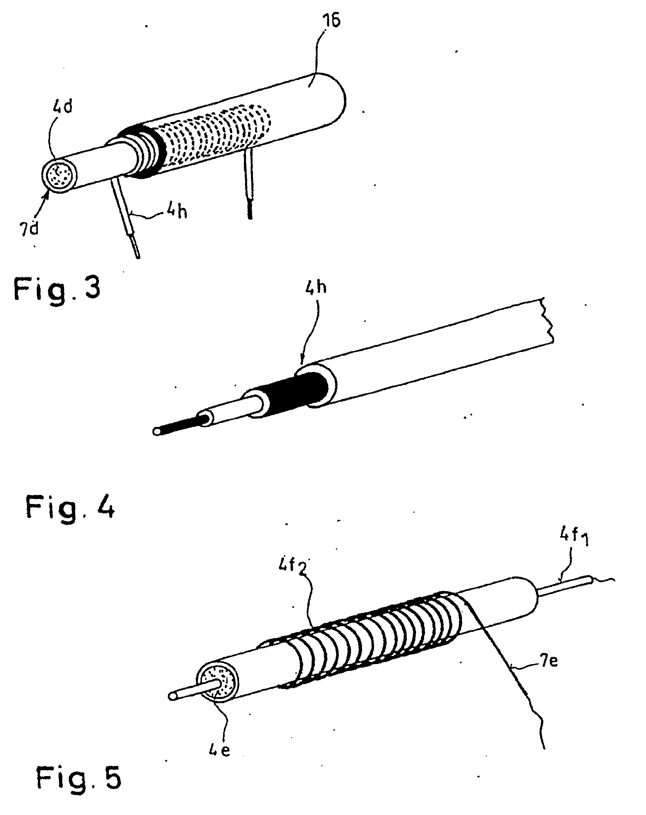

Die Möglichkeiten werden auszugsweise an Hand der Beispiele in den Fig.3-8 erläutert:

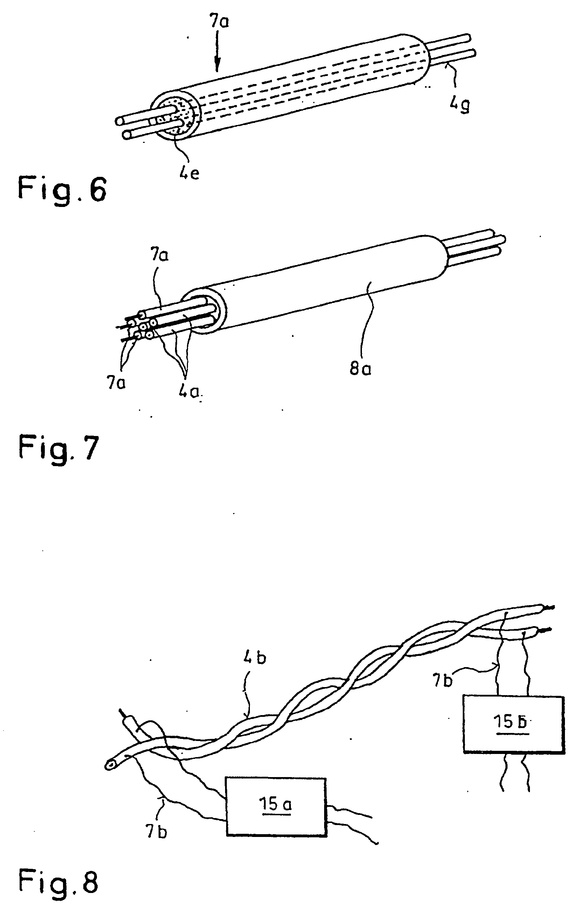

Fig.7 zeigt einen rel. einfachen Aufbau, der keine integrierte Lichtstromübertragung vorsieht, wohl aber eine elektrische Leistungsübertragung in Leistungsdrähten 4a eines mehradrigen Kabels 8a, während die Datenübertragung in Datenleitungen 7a des selben Kabels 8a erfolgt.

Fig.8 verwendet lediglich ein zweipoliges Leistungskabel 4b, das zur verbesserten Abschirrmwirkung verdrillt ausgebildet ist. Über dieses Leistungskabel wird gleichzeitig eine hochfrequente (relativ zum Leistungsstrom) Datenübertragung vorgenommen, wobei dazu entsprechende Signalkoppler 15a und 15b vorgesehen sind, die anderenends mit dem Anschluss 6 bzw. mit dem Rechner 13 oder dem Steuergerät 2 verbunden sind.

Solche Signalkoppler sind gegebenenfalls auch bei Aufbauten der Fig.3-5 vorgesehen, sollten bei diesen Aufbauten die elektrischen Leitungen auch für Datenzwecke verwendet werden.

Fig.6 zeigt einen Lichtleiter 4e, der als Seele ein elektrisches, zweipoliges Kabel 4g aufweist.

Fig.3 zeigt einen anderen Lichtleiter, bei dem ein zweipoliges Kabel (bei diesem Beispiel ein Koaxialkabel) 4h als Armierung um den Lichtleiter 4d gewunden ist. Zur Verstärkung ist als Aussenlage noch ein Hüllschlauch 16 aufgezogen.

Fig.4 zeigt eine Detaildarstellung des Koaxialkabels nach Fig.3, das natürlich neben einer Leistungsübertragung auch für eine Datenübertragung - mit allerdings geringerer Bandbreite als bei Licht- verwendet werden könnte, wobei bei diesem Beispiel an eine Datenübertragung über den Lichtleiter 4d gedacht ist.

Fig.5 zeigt eine Kombination aus Beispiel nach Fig.3 und Fig.6 mit einer einpoligen Armierung 4f2, die z.B. auch aus einem herkömmlichen Wellmetallschlauch gebildet sein kann, und einer einpoligen Seele 4f1 innerhalb des Lichtleiters 4e. Bei diesem Aufbau ergibt sich auch eine günstige Abschirrmwirkung durch den koaxialen Aufbau der elektrischen Leiter 4f1 und 4f2. Über diese können somit auch problemlos und störungsfrei Daten übertragen werden, so dass gegebenenfalls die Datenübertragung über den Lichtleiter 4e entfallen kann.

Die oben angesprochenen Signale umfassen:
bevorzugt amplitudenmodulierter/s oder frequenzmodulierter/s Strom, oder Licht einschliesslich nicht sichtbarer Lichtwellenbereiche, wie z.B. wie z.B. Infrarot.

Dabei ist durch die Erfindung umfasst, dass einerseits die leistungsmässig fliessenden elektrischen oder Licht-Ströme entsprechend moduliert werden, und/oder dass parallel zu diesen fliessenden Leistungsströmen elektrische bzw. lichtoptische Signale über die jeweils gleiche Leitung geschickt werden.
- 1: Mikroskopkörper
- 2: Steuergerät
- 3: Leistungsanschluss
- 4: Leistungsverbindung
- 5: Leistungsversorgungseinheit
- 6: Datenanschluss
- 7: Datenverbindung
- 8: Kabel
- 9: Einrichtung für das Umwandeln; elektrooptische Wandler
- 10: Lichtquelle
- 11: Stativ
- 12: externe Geräte
- 13: Rechner
- 14: Strahlenteiler
- 15: Signalkoppler
- 16: Hüllschlauch

## Patentansprüche

1. Operationsmikroskop mit einem Mikroskopkörper (1) und mit wenigstens einem Leistungsanschluss (3) an diesem und mit einer Leistungsverbindung (4) zum Empfangen von Leistung aus einer Leistungsversorgungseinheit (5) außerhalb des Mikroskopkörpers (1) und mit wenigstens einem Datenanschluss (6) am Mikroskopkörper (1) und einer Datenverbindung (7) zum Übertragen bzw. Empfangen und/oder Senden von Daten im/aus dem Mikroskopkörper (1) aus/in ein Steuergerät (2), **dadurch gekennzeichnet, dass** die Leistungsverbindung (4) und die Datenverbindung (7) integriert ausgebildet sind, und dass die Leistungsverbindung ein Lichtleiter (4c; 4d; 4e) ist und die Leistung ein Lichtstrom ist, und die Daten elektrische Signale sind, und dass die Datenverbindung eine Lichtwellendatenverbindung (7c; 7d) ist, die mit Einrichtungen für das Umwandeln von elektrischen in lichtoptische Signale ausgerüstet ist, so dass im Betriebszustand zwischen dem Datenanschluss (6) und dem Steuergetät (2) elektrische Signale in Lichtsignale und umgekehrt umgewandelt und übertragen werden.

2. Operationsmikroskop mit einem Mikroskopkörper (1) und mit wenigstens einem Leistungsanschluss (3) an diesem und mit einer Leistungsverbindung (4) zum Empfangen von Leistung aus einer Leistungsversorgungseinheit (5) außerhalb des Mikroskopkörpers (1) und mit wenigstens einem Datenanschluss (6) am Mikroskopkörper (1) und einer Datenverbindung (7) zum Übertragen bzw. Empfangen und/oder Senden von Daten im/aus dem Mikroskopkörper (1) aus/in ein Steuergerät (2), **dadurch gekennzeichnet, dass** die Leistungsverbindung (4) und die Datenverbindung (7) integriert ausgebildet sind, und dass die Leistungsverbindung einen Lichtleiter (4d; 4e) und eine elektrische Leitung (4f; 4g; 4h) umfasst und die Leistung elektrische Leistung und Lichtstrom sind, und bei dem die Daten elektrische Signale sind, und dass der Lichtleiter (4d; 4e) beiderends mit Einrichtungen (9) für das Umwandeln von elektrischen im lichtoptische Signale ausgerüstet ist, so dass im Betriebszustand zwischen dem Mikroskopkörper (1) und dem Steuergerät (2) in Lichtsignale umgewandelte elektrische Signale über den Lichtleiter (4d; 4e) übertragen werden.

3. Mikroskop nach Anspruch 1 oder 2, **dadurch gekennzeichnet, dass** die Leistungsverbindung (4a) einen Teil eines mehradrigen Kabels (8) ausnützt, während die Datenverbindung (7a) einen anderen Teil des selben Kabels (8) ausnützt.

4. Mikroskop nach Anspruch 1, **dadurch gekennzeichnet, dass** die Lichtwellendatenverbindung (7c;7d) über denselben Lichtleiter (4c;4d) wie die Lichtstromleistungsverbindung hergestellt ist.

5. Mikroskop nach Anspruch 2, **dadurch gekennzeichnet, dass** die elektrische Leitung (4f;4g;4h) als eine Armierung (4f2;4h) und/oder als Seele (4f1 ;4g) für den Lichtleiter (4d; 4e) ausgebildet ist.

6. Mikroskop nach einem der Ansprüche 1 - 5 bei dem dem Lichtleiter (4c) eine Lichtquelle (10) zur Erzeugung einer Operationsfeldbeleuchtung zugeordnet ist.

7. Mikroskop nach einem der vorhergehenden Anspruche bei dem der Leistungsverbindung (4) und/oder der Datenverbindung (7) Sensoren und/oder Antriebe für die Steuerung des Mikroskops oder eines Stativs zugeordnet sind.

8. Operationsmikroskop nach einem dervorhergehenden Ansprüche mit einer Lichtquelle (10) zur Operationsfeldbeleuchtung, die mit dem Mikroskopkörper (1) über einen Lichtleiter (4c;4d) verbindbar oder verbunden ist, und mit Antrieben und/oder Sensoren, die über Datenbahnen mit wenigstens einem Steuergerät (2) verbindbar oderverbunden sind, **dadurch gekennzeichnet**, das die Datenbahnen optoelektronische Datenwandler (9a,9b) umfassen, die beiderends des Lichtleiters (4c;4d) - gegebenenfalls über Kupplungen - mit diesem verbunden bzw. verbindbar sind, so dass im Betriebszustand sowohl die Datenübertragung zwischen dem Mikroskopkörper (1) und dem Steuergerät (2), als auch die Lichtübertragung zwischen der Lichtquelle (10) und dem Mikroskopkörper (1) über den Lichtleiter erfolgt.

## Claims

1. A surgical microscope with a microscope body (1) and at least one power port (3) thereon and with a power connection (4) for receiving power from a power supply unit (5) outside the microscope body (1) and with at least one data port (6) on the microscope body (1) and a data connection (7) for transmitting / receiving and/or sending data to/from the microscope body (1) from/to a control device (2), **characterised in that** the power connection (4) and the data connection (7) are integrally formed and **in that** the power connection is a light conductor (4c; 4d; 4e) and the power is a light flux, and the data is electrical signals, and **in that** the data connection is a light wave data connection (7c; 7d), which is equipped with means for converting electrical signals into light-optical signals so that in the operating state electrical signals between the data port (6) and the control device (2) are converted into light signals and vice versa, and transmitted.

2. The surgical microscope with a microscope body (1) and at least one power port (3) thereon and with a power connection (4) for receiving power from a power supply unit (5) outside the microscope body (1) and with at least one data port (6) on the microscope body (1) and a data connection (7) for transmitting / receiving and/or sending data to/from the microscope body (1) from/to a control device (2), **characterised in that** the power connection (4) and the data connection (7) are integrally formed, and **in that** the power connection comprises a light conductor (4d; 4e) and an electrical line (4f; 4g; 4h) and the power is electrical power and light flux, and where the data is electrical signals, and **in that** the light conductor (4d; 4e) is equipped at either end with means (9) for converting electrical signals into light-optical signals, so that in the operating state electrical signals converted into light signals between the microscope body (1) and the control device (2) are transmitted via the light conductor (4d; 4e).

3. The microscope according to claim 1 or 2, **characterised in that** the power connection (4a) utilises a part of the multi-core cable (8), whilst the data connection (7a) utilises another part of the same cable (8).

4. The microscope according to claim 1, **characterised in that** the light wave data connection (7c; 7d) is established via the same light conductor (4c; 4d) as the light flux power connection.

5. The microscope according to claim 2, **characterised in that** the electrical line (4f; 4g; 4h) is implemented as a sheath (4f2; 4h) and/or as a core (4f1; 4g) for the light conductor (4d; 4e).

6. The microscope according to one of claims 1 - 5, where a light source (10) for generating a surgical field illumination is assigned to the light conductor (4c).

7. The microscope according to one of the preceding claims, where sensors and/or drives for controlling the microscope or a tripod are assigned to the power connection (4) and/or the data connection (7).

8. The surgical microscope according to one of the preceding claims with a light source (10) for surgical field illumination, which is connectable or connected with the microscope body (1) via a light conductor (4c; 4d), and with drives and/or sensors, which are connectable or connected via data tracks with at least one control device (2), **characterised in that** the data tracks comprise opto-electronic data converters (9a, 9b), which are connected or connectable therewith at either end of the light conductor (4c, 4d), possibly via couplings, so that in the operating state both the data transmission between the microscope body (1) and the control device (2) and the light transmission between the light source (10) and the microscope body (1) is effected via the light conductor.

## Revendications

1. Microscope chirurgical avec un corps de microscope (1) et au moins une connexion d'alimentation (3) sur ce dernier et avec une liaison d'alimentation de puissance (4) pour recevoir de la puissance depuis une unité d'alimentation de puissance (5) extérieure au corps de microscope (1) et au moins une connexion de données (6) sur le corps de microscope (1) et une liaison de données (7) pour la transmission et la réception et/ou l'envoi de données vers le / du corps de microscope (1) d'un / vers un dispositif de commande (2), **caractérisé en ce que** liaison d'alimentation de puissance (4) et la liaison de données (7) sont réalisées sous forme intégrée et que la liaison d'alimentation est un guide de lumière (4c ; 4d ; 4e) et que la puissance est un flux lumineux et que les données sont des signaux électriques et que la liaison de données est une liaison de données à ondes lumineuses (7c ; 7d) équipée de dispositifs pour la conversion de signaux électriques en signaux optiques et qu'en état de fonctionnement des signaux électriques sont convertis en signaux optiques et transmis entre la connexion de données (6) et le dispositif de commande (2).

2. Microscope chirurgical avec un corps de microscope (1) et au moins une connexion d'alimentation de puissance (3) sur ce dernier et avec une liaison d'alimentation de puissance (4) pour recevoir de la puissance d'une unité d'alimentation de puissance (5) extérieure au corps de microscope (1) et au moins une connexion de données (6) sur le corps de microscope (1) et une liaison de données (7) pour la transmission et la réception et/ou l'envoi de données vers le / du corps de microscope (1) d'un / vers un dispositif de commande (2), **caractérisé en ce que** liaison d'alimentation de puissance (4) et la liaison de données (7) sont réalisées sous forme intégrée et que la liaison de puissance comprend un guide de lumière (4d ; 4e) et une liaison électrique (4f ; 4g ; 4h) et que la puissance électrique et un flux lumineux constituent la puissance et les données sont des signaux électriques et que les données sont des signaux électriques et que le guide de lumière (4d ; 4e) est équipé aux deux extrémités de dispositifs (9) pour la conversion de signaux électriques en signaux optiques de sorte qu'en état de fonctionnement des signaux électriques convertis en signaux optiques soient transmis par le guide de lumière (4d ; 4e) entre le corps de microscope (1) et le dispositif de commande (2).

3. Microscope selon la revendication 1 ou 2, **caractérisé en ce que** la liaison de puissance (4a) utilise une partie d'un câble multiconducteurs (8) alors que la liaison de données (7a) utilise une autre partie du même câble (8).

4. Microscope selon la revendication 1, **caractérisé en ce que** la liaison de données à ondes lumineuses (7c ; 7d) est réalisée par le même guide de lumière (4c ; 4d) que la liaison de puissance de flux lumineux.

5. Microscope selon la revendication 2, **caractérisé en ce que** la liaison électrique (4f ; 4g ; 4h) est réalisée sous forme d'un blindage (4f2 ; 4h) et/ou d'âme (4f1; 4g) pour le guide de lumière (4d ; 4e).

6. Microscope selon l'une des revendications 1 - 5 dans lequel une source de lumière (10) pour la production d'un éclairage de champ opératoire est attribuée au guide de lumière (4c).

7. Microscope selon la revendication précédente, dans lequel des capteurs et/ou entraînements pour la commande de microscope ou d'un support sont attribués à la liaison de puissance (4) et/ou la liaison de données (7).

8. Microscope chirurgical selon l'une des revendications précédentes avec une source de lumière (10) pour l'éclairage du champ opératoire, reliable ou reliée avec le corps de microscope (1) par un guide de lumière (4c ; 4d), et avec des entrainements et/ou capteurs qui, par les liaisons de données, sont reliables ou reliés avec au moins un dispositif de commande (2), **caractérisé en ce que** les liaisons de données comprennent des convertisseurs de données (9a, 9b) reliés ou reliables, le cas échéant par couplages, aux deux extrémités du guide de lumière (4c ; 4d), si bien qu'en état de fonctionnement aussi bien la transmission de données entre le corps de microscope (1) et le dispositif de commande (2) que la transmission de lumière entre la source de lumière (10) et le corps de microscope (1) passent par le guide de lumière.
